Europäisches Patentamt

European Patent Office

Office européen des brevets

(11) Numéro de publication: **0 262 996 B1**

(12) **FASCICULE DE BREVET EUROPEEN**

(45) Date de publication de fascicule du brevet: **11.03.92**  (51) Int. Cl.5: **G01J 5/52**

(21) Numéro de dépôt: **87401843.5**

(22) Date de dépôt: **07.08.87**

(54) **Procédé de mesure de la température d'un corps par détection optique et échauffement module.**

(30) Priorité: **08.08.86 FR 8611542**

(43) Date de publication de la demande:
**06.04.88 Bulletin 88/14**

(45) Mention de la délivrance du brevet:
**11.03.92 Bulletin 92/11**

(84) Etats contractants désignés:
**AT BE CH DE ES GB IT LI LU NL SE**

(56) Documents cités:
**DE-A- 2 153 077**
**US-A- 3 884 075**

**PATENT ABSTRACTS OF JAPAN, vol. 5, no. 201 (P-94)[873], 19 décembre 1981; & JP-A-56 122 924**

**JOURNAL OF PHYSICS E: SCIENTIFIC INSTRUMENTS, vol. 13, no. 3, mai 1980, pages 306-310, The Institute of Physics; J.L. GARDNER et al.: "Multi-wavelength radiation pyrometry where reflectance is measured to estimate emissivity"**

**MECHANICAL ENGINEERING, vol. 94, no. 7, juillet 1972, pages 12-15, New York, US; G.D. NUTTER: "Radiation thermometry"**

(73) Titulaire: **ELECTRICITE DE FRANCE Service National**
**2, rue Louis Murat**
**F-75008 Paris(FR)**

Titulaire: **ECOLE CENTRALE DES ARTS ET MANUFACTURES DE PARIS**
**Grande Voie des Vignes**
**F-92290 Chatenay-Malabry(FR)**

(72) Inventeur: **Berthet, Olivier**
**137, rue Boucicaut**
**F-92260 Fontenay-Aux-Roses(FR)**
Inventeur: **Greffet, Jean-Jacques**
**49, rue de Chatenay**
**F-92160 Antony(FR)**
Inventeur: **Denayrolles, Yves**
**6, Ouai Watier**
**F-78400 Chatou(FR)**

(74) Mandataire: **Mongrédien, André et al**
**c/o BREVATOME 25, rue de Ponthieu**
**F-75008 Paris(FR)**

"Theory and Technique for Surface Temperature Determinations by Measuring the Radiance Temp. and the Absorptance Ratio for Two Wavelengths", De Witt and Kunz, Temp., its Measurement and Control in Science and Industry, vol. 4, 1972

**Description**

La présente invention a pour objet un procédé de mesure de la température d'un corps par détection optique et échauffement modulé. Le procédé de l'invention relève de la pyrométrie, qui est une technique de mesure de température à distance.

Le procédé de l'invention permet d'étendre l'utilisation de la pyrométrie aux corps réfléchissants et aux corps placés dans des environnements rayonnants. Des cas d'utilisation typiques sont :
- les mesures de température d'objets placés dans des fours,
- les mesures de température de corps réfléchissants (métaux polis, par exemple).

La pyrométrie classique se heurte à deux difficultés qui sont les suivantes :

a) le rayonnement partant du corps dont on désire mesurer la température est la somme du rayonnement émis par ce corps et du rayonnement réfléchi par celui-ci. Seul le rayonnement émis par le corps dépend de la température. On est donc lié par une première condition : il faut que le flux réfléchi soit négligeable devant le flux émis. Il est impossible, par exemple, de mesurer la température d'un corps très réfléchissant ou d'un corps placé dans un environnement qui rayonne fortement. C'est le cas par exemple pour les métaux polis ou les matériaux placés dans un four ;

b) en supposant ce premier problème résolu, il en demeure un second qui est que la quantité de rayonnement détectée est proportionnelle au flux émis, lequel est le produit d'une fonction connue de la température (qui est la luminance du corps noir idéal) et de l'émissivité du corps étudié, qui est une caractéristique de l'échantillon. Or, cette quantité est en général inconnue et dépend en particulier de l'état de surface dans le cas des corps solides.

Le document "Theory and Technique for Surface Temperature Determinations by Measuring the Radiance Temperatures and the Absorbance Radiation for two Wavelengths" de D.P. De WITT and H. KUNZ (1972) décrit un procédé dans lequel on surchauffe le corps à mesurer par un faisceau lumineux. De l'élévation de température qui en résulte, et de signaux détectés par un photodétecteur, on tire différentes grandeurs permettant d'atteindre la température du corps.

La présente invention reprend cette disposition mais en utilisant un rayonnement modulé en intensité, ce qui crée une modulation de la température. Le rayonnement partant du corps étudié est alors la somme d'un flux émis qui est modulé dans le temps, d'un flux émis constant et d'un flux réfléchi qui est lui aussi constant. Il est alors aisé de se débarrasser de ces deux derniers flux en ne traitant que le premier qui est le seul modulé. On évite ainsi le premier écueil mentionné plus haut. Quant au second, il est également évité par un traitement de signal approprié qui permet de s'affranchir de l'émissivité du corps, qui reste inconnue.

De manière plus précise, la présente invention a pour objet un procédé de mesure par détection optique de la température d'un corps, qui s'affranchit des flux parasites émis par l'environnement du corps, procédé dans lequel on provoque un échauffement d'une zone du corps dont on veut mesurer la température, ce procédé étant caractérisé par le fait que :
- cet échauffement est modulé en intensité,
- on détecte le rayonnement thermique provenant de cette zone, dans au moins une plage de longueur d'onde ce qui fournit un signal électrique ayant une composante continue et une composante de modulation,
- on extrait du signal électrique la composante de modulation indépendante des flux réfléchis, cette composante étant une fonction de l'émissivité du corps à la longueur d'onde de détection et de la température du corps par l' intermédiaire de la fonction dérivée par rapport à la température de la luminance d'un corps noir,
- par une acquisition et un traitement des mesures appropriés, on extrait de la composante de modulation la température du corps.

L'échauffement modulé peut être produit par un rayonnement optique que l'on module en intensité et que l'on dirige sur la zone à mesurer. Mais l'échauffement peut être également produit par un four à induction dont on module le courant d'alimentation.

Dans une première variante :
- on détecte le rayonnement thermique à une première longueur d'onde et à une seconde longueur d'onde,
- pour chacune de ces longueurs d'onde, on extrait du signal la composante de modulation qui a la même fréquence que la fréquence de modulation de l'échauffement, cette composante étant proportionnelle au produit de l'émissivité monochromatique de l'objet et de la dérivée de la luminance par rapport à la température,
- on calcule le rapport des deux composantes ainsi obtenues pour ces deux longueurs d'onde, ce rapport étant supposé indépendant de l'émissivité de l'objet et n'étant plus fonction que de la température du corps par l'intermédiaire d'une fonction qui est le rapport des dérivées de la luminance par rapport à la température,
- à partir de la valeur de ce rapport, on calcule la température du corps par inversion de la fonction en question.

Dans une seconde variante :
- on relève la variation de la composante de modulation du signal électrique, variation qui comprend un terme linéaire et un terme quadratique par rapport à l'intensité de l'échauffement modulé,
- on forme le rapport de ces deux termes, qui ne dépend plus de l'émissivité du corps, de façon rigoureuse dans cette variante, mais de la température du corps,
- en travaillant à deux longueurs d'onde on obtient deux rapports R1, R2 dont on forme le rapport R′ qui ne dépend plus que de la température.

Naturellement on peut imaginer d'autres variantes. Par exemple on pourrait détecter dans le signal modulé non pas la composante ayant la fréquence de modulation, mais la composante ayant une fréquence double.

Quant à la modulation du faisceau lumineux, en pratique on utilisera une modulation par tout ou rien par commodité, mais peut imaginer des modulations plus sophistiquées ou des techniques utilisant un chauffage impulsionnel.

On peut préciser davantage toutes ces questions de la manière suivante. La luminance d'un corps noir idéal est une fonction de la température T de ce corps que l'on notera L(T). Cette fonction est connue sous le nom de fonction de Planck. Dans l'invention, la température T est la somme de la température To du corps et d'un terme d'échauffement dû à l'apport énergétique provenant du faisceau lumineux. On peut noter, en se limitant aux premiers termes du développement :

$$T = To + DTo + DT1 \exp(jwt)$$

où DTo est une composante continue de l'échauffement, DT1 est une composante liée à la modulation et w la pulsation de la modulation du faisceau (c'est-à-dire en pratique, le premier harmonique correspondant à l'occultation du faisceau).

Par ailleurs, il existe un flux réfléchi par l'objet, que l'on peut noter Lr.

Le flux provenant du corps est donc de la forme $E.L(T) + Lr$, où E est l'émissivité monochromatique du corps.

On peut faire l'hypothèse, bien vérifiée dans la pratique, que l'émissivité E et la réflectivité varient beaucoup plus doucement avec la température que la fonction L(T). La dépendance du flux vis-à-vis de T tient donc uniquement dans la fonction L(T) en ce qui concerne les faibles variations qui nous occupent. Finalement, le signal détecté sera de la forme :

$$S = k.E.\left[ L(To+DTo) + Lr \right] + k.E \left(\frac{\partial L}{\partial T}\right)_{To} DT1 \exp(jwt)$$

où k est une constante dépendante de la longeur d'onde et caractéristique du dispositif expérimental et où $\frac{\partial L}{\partial T}$ représente la dérivée partielle de la fonction de luminance L par rapport à la température T, cette dérivée devant être prise à la température To. Le premier terme est un terme constant. Le second seul est variable dans le temps.

L'extraction de la partie modulée correspondant à ce second terme peut se faire par un filtre passe-haut, ou par un simple condensateur de liaison, ou par détection synchrone. On obtient donc finalement une quantité s de la forme :

$$s = kE\left(\frac{\partial L}{\partial T}\right)_{To}.DT1,$$

où DT1 dépend de la puissance du rayonnement lumineux envoyé sur le corps.

L'extraction de la température To à partir de cette quantité s n'est pas possible, car on ignore la valeur de l'émissivité monochromatique E. Pour résoudre cette difficulté, on effectue la mesure à deux longueurs d'onde différentes, comme en pyrométrie bichromatique. On obtient alors deux signaux s1 et s2 où interviennent les deux émissivités E1, E2 aux deux longueurs d'onde en question. Si l'on suppose que ces deux quantités sont égales pour des longueurs d'onde appropriées, le rapport s1/s2 est une quantité R où n'apparaît plus l'émissivité :

$$R = \frac{\left(\dfrac{\partial L1}{\partial T}\right)_{To}}{\left(\dfrac{\partial L2}{\partial T}\right)_{To}}$$

où L1 et L2 désignent les luminances respectivement aux deux longueurs d'onde utilisées. Un tel rapport est une fonction de la seule température, fonction que l'on connaît théoriquement et que l'on sait inverser, ce qui signifie que l'on sait trouver la température To connaissant la valeur du rapport R.

De façon plus précise, à partir de la fonction de Planck traduisant la luminance en fonction de la température, on peut montrer que le rapport en question peut s'écrire :

$$R = \left(\frac{\lambda 2}{\lambda 1}\right)^{-6} \exp\left[- \frac{C}{To}\left(\frac{1}{\lambda 1} - \frac{1}{\lambda 2}\right)\right]$$

où λ1 et λ2 sont les deux longueurs d'onde utilisées et où C est égal à

$$\frac{hc}{k}$$

où h est la constante de Planck, c la vitesse de la lumière dans le vide et k la constante de Boltzman. Ainsi, connaissant R, et les deux longueurs d'onde λ1 et λ2, on en déduit aisément To par inversion de la fonction exponentielle.

Dans une seconde variante permettant de s'affranchir de l'hypothèse bichromatrique, on pousse le développement de la fonction de luminance jusqu'au terme quadratique qui suit le terme linéaire. Ce terme s' est de la forme :

$$kE \left(\frac{\partial^2 L}{\partial T^2}\right)_{To} DTo.DT1 \exp jwt$$

Si l'on fait le rapport de ce terme s' du second degré au terme s du premier degré déjà évoqué, on obtient un rapport d'où a été éliminée l'émissivité E, mais de façon exacte cette fois-ci.

Afin d'éliminer DTo on forme le rapport R' des deux rapports R1 et R2 obtenus à deux longueurs d'onde différentes.

La mise en oeuvre du procédé de l'invention sera mieux comprise à la lumière de la description qui suit, qui se réfère à des dessins annexés sur lesquels :

- la figure 1 représente un exemple de réalisation d'un dispositif de mesure de température,
- la figure 2 montre des courbes de variation du signal détecté en fonction de la puissance de la source lumineuse.

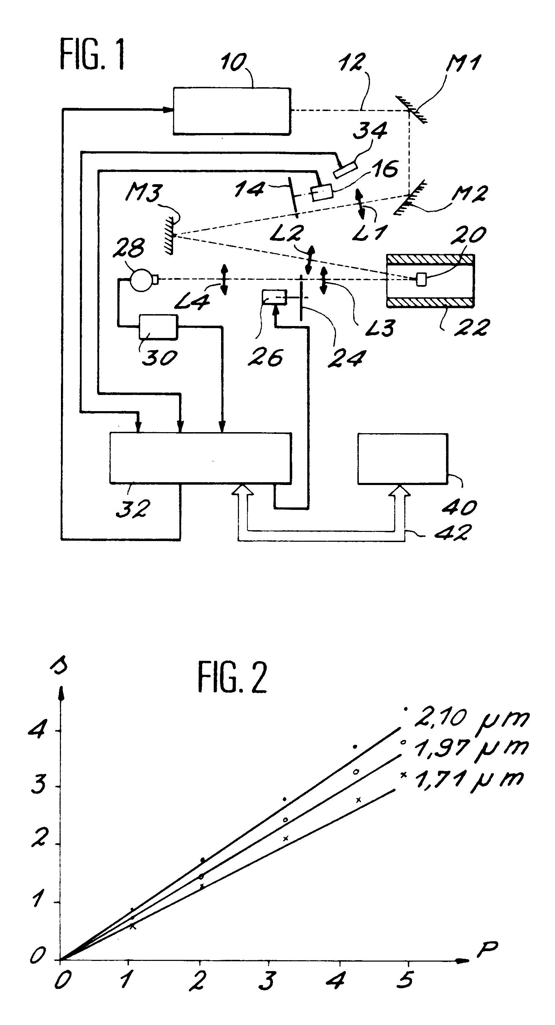

Sur la figure 1, on voit un laser 10, par exemple à argon ionisé, émettant un faisceau lumineaux 12 renvoyé par des miroirs M1, M2 sur une première lentille L1, un hacheur constitué par un disque 14 actionné en rotation par un moteur 16, un troisième miroir M3 et une seconde lentille L2 qui focalise le faisceau lumineux sur l'objet 20 dont on veut mesurer la température. Dans l'exemple de réalisation illustré, cet objet est placé dans un four 22. Une troisième lentille L3, par exemple en CaF$_2$, collecte le flux émis par l'objet. Des filtres interférentiels sont montés sur un support 24 et peuvent être mis en place dans le faisceau au moyen d'un moteur 26. Ces filtres peuvent travailler par exemple à 1,71 ; 1,97 ; 2,1 et 2,2 $\mu$m. Une quatrième lentille L4 focalise le faisceau ainsi filtré sur un photodétecteur 28, qui peut être par exemple en InSb. Un amplificateur 30 amplifie la partie modulée du signal détecté. Le signal amplifié est appliqué à un circuit 32 de démodulation dit "Lock-in amplifier", qui reçoit par ailleurs un signal de référence du hacheur 14. Le circuit 32 extrait du signal reçu la partie qui est à la fréquence d'occultation du faisceau, par exemple au moyen d'une démodulation synchrone. Le circuit 32 comprend par ailleurs un microprocesseur qui est capable de commander la mise en place du filtre interférentiel approprié 24 par action sur le moteur 26 et la puissance émise par le laser 10.

Par ailleurs, le dispositif représenté comprend une diode 34, par exemple au silicium, qui permet de contrôler la puissance émise par le laser. L'information correspondante est transmise au circuit 32.

Un ordinateur 40, par exemple un APPLE II, commande la variation de puissance du laser, et effectue le traitement de signal permettant d'inverser la fonction mesurée pour trouver la température de l'échantillon, comme expliqué plus haut. L'ordinateur 40 est relié au circuit 32 par un bus 42, par exemple du type IEEE 488.

La figure 2 montre un exemple de résultats obtenus à l'aide de ce dispositif. L'amplitude s du signal photothermique est représenté en fonction de la puissance P du laser. Ces deux grandeurs étant portées en unités arbitraires. On voit trois séries de points de mesure correspondant à trois longueurs d'onde transmises par trois filtres interférentiels différents travaillant respectivement à 1,71 ; 1,97 et 2,10 $\mu$m. Les droites montrent la pente de la courbe à faible puissance. L'écart entre les points et les droites traduit, à forte puissance, l'apparition d'un terme quadratique. Ce sont ces deux termes (linéaire ou quadratique) qui sont mis en oeuvre dans les deux variantes décrites plus haut.

Naturellement, il va de soi qu'on peut utiliser un laser autre qu'un laser à argon ionisé, par exemple un laser à $CO_2$ émettant à 10,6 $\mu$m. On peut aussi renoncer au laser et utiliser une simple lampe, par exemple au xénon, ou au mercure, ou au sodium. On peut aussi guider le faisceau lumineux vers l'objet à mesurer par une fibre optique et reprendre le flux émis par une autre fibre optique.

Tout autre mode de chauffage, local ou non et périodique peut être utilisé.

Les mesures effectuées par les Demandeurs avec une telle installation sur un échantillon en acier se sont avérées exactes à ± 2% près, sur une gamme de températures allant de 600 à 1200 K. La température réelle de l'échantillon était mesurée directement par un thermocouple.

On peut observer pour finir qu'il est déjà connu d'envoyer sur un objet un faisceau lumineux modulé et de détecter le rayonnement infrarouge provenant de cet objet. Ces techniques et leur applications sont passées en revue dans les articles de MM Nordal et al. "New Developments in Photothermal Radiometry", Infrared Phys., vol25, 1985 et de A.C.Tam" Pulsed Photothermal Radiometry for nonconstant spectroscopy, material testing and inspection measurements", Infrared Phys., vo125, 1985. Mais dans de telles techniques, il s'agit avant tout de contrôler de manière non destructive un échantillon. Si celui-ci comporte des défauts internes ou des inhomogénéités affectant suffisamment les propriétés optiques et/ou les conditions de propagation thermique au voisinage de la surface, ceux-ci peuvent être détectés par observation des modifications du signal périodique infrarouge émis par la surface excitée.

Il ne s'agit donc en aucun cas d'un procédé permettant de mesurer une température. Cette possibilité d'atteindre la température d'un corps résulte des travaux théoriques et expérimentaux des Demandeurs exposés plus haut. Cette mesure nécessite un traitement de signal original (utilisation du premier terme linéaire ou des deux premiers termes linéaire et quadratique), traitement qui n'est pas enseigné dans le document cité.

On peut par ailleurs souligner le côté paradoxal de l'invention qui tient à ce que l'on modifie la grandeur que l'on veut mesurer (la température) par un apport extérieur de chaleur. Dans la technique antérieure connue mettant en oeuvre des "ondes thermiques", cet aspect paradoxal n'apparaissait pas puisque ce qu'il était question de contrôler consistait en une qualité d'une pièce, qualité n'ayant rien à voir avec la température. En d'autres termes, dans l'art antérieur, il s'agissait d'une radiométrie photothermique alors que, dans l'invention, il s'agit d'une pyrométrie photothermique.

**Revendications**

1. Procédé de mesure par détection optique de la température d'un corps, qui s'affranchit des flux parasites émis par l'environnement du corps, procédé dans lequel on provoque un échauffement d'une zone du corps (20) dont on veut mesurer la température, ce procédé étant caractérisé par le fait que :
   - cet échauffement est modulé en intensité,
   - on détecte le rayonnement thermique provenant de cette zone, dans au moins une plage de longueur d'onde, ce qui fournit un signal électrique ayant une composante continue et une composante de modulation,
   - on extrait du signal électrique la composante de modulation indépendante des flux réfléchis, cette composante étant une fonction de l'émissivité (E) du corps à la longueur d'onde de détection et de la température du corps par l'intermédiaire de la fonction dérivée par rapport à la température de la luminance d'un corps noir,
- par une acquisition et un traitement des mesures appropriés (40), on extrait de la composante de modulation la température du corps.

2. Procédé selon la revendication 1, caractérisé par le fait que :
- on détecte le rayonnement thermique à une première longueur d'onde et à une seconde longueur d'onde,
- pour chacune de ces longueurs d'onde, on extrait du signal la composante de modulation qui a la même fréquence que la fréquence de modulation de l'échauffement, cette composante étant proportionnelle au produit de l'émissivité monochromatique de l'objet et de la dérivée de la luminance par rapport à la température,
- on calcule le rapport des deux composantes ainsi obtenues pour ces deux longueurs d'onde, ce rapport devenant indépendant de l'émissivité de l'objet pour des longueurs d'onde choisies de manière appropriées et n'étant plus fonction que de la température du corps par l'intermédiaire d'une fonction qui est le rapport des dérivées de la luminance par rapport à la température,
- à partir de la valeur de ce rapport, on calcule la température du corps par inevrsion de la fonction en question.

3. Procédé selon la revendication 1, caractérisé par le fait que :
- on relève la variation de la composante de modulation du signal électrique, variation qui comprend un terme linéaire et un terme quadratique par rapport à l'intensité de l'échauffement modulé,
- on forme le rapport de ces deux termes, qui ne dépend plus de l'émissivité du corps mais de la température du corps et de l'échauffement produit,
- on forme deux tels rapports pour deux longueurs d'onde différentes et l'on forme le rapport de ces rapports, ce qui fournit une quantité qui ne dépend plus que de la température.

4. Procédé selon la revendication 1, caractérisé par le fait que l'échauffement modulé est produit par un rayonnement optique (12) modulé en intensité, ce rayonnement étant dirigé sur la zone du corps (20) dont on veut mesurer la température.

**Claims**

1. Process for measuring by optical detection the temperature of a body, which is free of the spurious fluxes emitted by the environment of the body, in which a zone of the body (20) whose temperature is to be measured is heated, said process being characterized in that said heating is intensity-modulated, the thermal radiation from said zone is detected in at least one wavelength range, which supplies an electrical signal having a continuous component and a modulation component, from the electrical signal is extracted the modulation component independent of the reflected fluxes, said component being a function of the emissivity (E) of the body at the detection wavelength and the temperature of the body via the derived function relative to the luminance temperature of a blackbody and by an acquisition and processing of the appropriate measurements (40) the temperature of the body is extracted from the modulation component.

2. Process according to claim 1, characterized in that the thermal radiation is detected at a first wavelength and at a second wavelength, for each of these wavelengths, the modulation component - which has the same frequency as the modulation frequency of the heating - is extracted from the signal, this component being proportional to the product of the monochromatic emissivity of the object and of the derivative of the luminance in relation to the temperature, the ratio of the two components thus obtained for these two wavelengths is computed, this ratio having to be independent of the emissivity of the object for wavelengths selected in an appropriate manner and being only a function of the temperature of the body by a function which is the ratio of the derivatives of the luminance in relation to the temperature, from the value of this ratio, the temperature of the body is computed by inversion of the function in question.

3. Process according to claim 1, characterized in that the variation of the modulation component of the electric signal is noted, a variation which comprises a linear term and a quadratic term in relation to the intensity of the modulated heating, the ratio of these two terms is formed, which no longer depends on the emissivity of the body, but on the temperature of the body, two such ratios are formed for two different wavelengths and the ratio of these ratios is formed, which provides a quantity which depends only on the temperature.

**4.** Process according to claim 1, characterized in that the modulated heating is produced by an optical radiation (12), modulated in intensity, this radiation being directed on the zone of body (20) whose temperature it is desired to measure.

**Patentansprüche**

**1.** Verfahren zum Messen mittels optischer Erfassung der Temperatur eines Körpers, der parasitäre Ströme freigibt, ausgegeben durch die Umgebung des Körpers, Verfahren, bei dem das Aufheizen einer Zone des Körpers (20) hervorgerufen wird, von der man die Temperatur messen will, wobei das Verfahren dadurch gekennzeichnet ist, daß:
das Aufheizen in seiner Intensität moduliert wird,
die thermische Strahlung, die von dieser Zone ausgeht, wenigstens in einem Wellenlängenbereich erfaßt wird, was ein elektrisches Signal liefert, das eine kontinuierliche Komponente und eine Modulationskomponente aufweist,
aus dem elektrischen Signal die Komponente der von den reflektierten Strömen unabhängigen Modulation herausgenommen wird, wobei diese Komponente eine Funktion der Strahlungsfähigkeit (E) des Körpers bei der Erfassungswellenlänge und der Körpertemperatur mittels der Funktion ist, die bezüglich der Temperatur der Leuchtdichte eines schwarzen Körpers abgeleitet ist,
durch eine Erfassung und eine Verarbeitung von geeigneten Messungen (40), die Komponente der Modulation der Temperatur des Körpers herausgezogen wird.

**2.** Verfahren nach Anspruch 1, dadurch gekennzeichnet, daß:
die thermische Strahlung bei einer ersten Wellenlänge und einer zweiten Wellenlänge erfaßt wird,
für jede dieser Wellenlängen das Signal der Modulationskomponente herausgezogen wird, die dieselbe Frequenz wie die Modulationsfrequenz des Aufheizens hat, wobei diese Komponente proportional zum Produkt aus monochromatischer Strahlungsfähigkeit des Objektes und der Ableitung der Leuchtdichte bezüglich der Temperatur ist,
das Verhältnis der beiden für diese beiden Wellenlängen so erhaltenen Komponenten berechnet wird, wobei das Verhältnis unabhängig wird von der Strahlungsfähigkeit des Objektes für die geeignet gewählten Wellenlängen, und nur noch in Abhängigkeit von der Temperatur des Körpers mittels einer Funktion ist, die das Verhältnis der Leuchtdichten-Ableitungen bezüglich der Temperatur ist,
ausgehend von dem Wert dieses Verhältnisses, die Temperatur des Körpers durch Umkehrung der in Rede stehenden Funktion berechnet wird.

**3.** Verfahren nach Anspruch 1, dadurch gekennzeichnet, daß:
die Veränderung der Modulationskomponente des elektrischen Signals aufgenommen wird, eine Veränderung, die einen linearen Term und einen quadratischen Term bezüglich der Intensität des modulierten Aufheizens aufweist,
das Verhältnis der beiden Terme gebildet wird, das nicht mehr von der Strahlungsfähigkeit des Körpers, jedoch von der Temperatur des Körpers und der erzeugten Aufheizung abhängt,
zwei derartige Verhältnisse für zwei unterschiedliche Wellenlängen gebildet werden, und das Verhältnis dieser beiden Verhältnisse gebildet wird, was eine Menge liefert, die nicht mehr von der Temperatur abhängt.

**4.** Verfahren nach Anspruch 1, dadurch gekennzeichnet, daß das modulierte Aufheizen durch eine optische Strahlung (12) erzeugt wird, die in ihrer Intensität moduliert wird, wobei die Strahlung auf eine Zone des Körpers (20) gerichtet wird, von der man die Temperatur messen will.

# FIG. 1

# FIG. 2